# EUROPÄISCHE PATENTSCHRIFT

(11) **EP 1 172 635 B1**
(45) Veröffentlichungstag und Bekanntmachung des Hinweises auf die Patenterteilung: **20.05.2009**
(21) Anmeldenummer: 01115532.2
(22) Anmeldetag: 28.06.2001
(51) Int. Cl.: G01D 5/347

(54) **Optische Positionsmesseinrichtung**
Optical position measuring device
Dispositif optique de mesure de positions

(30) Priorität: 10.07.2000 DE 10033263
(43) Veröffentlichungstag der Anmeldung: 16.01.2002
(73) Patentinhaber: Dr. Johannes Heidenhain GmbH, 83292 Traunreut (DE)
(72) Erfinder: Holzapfel, Wolfgang, 83119 Obing (DE); Huber, Walter, 83278 Traunstein (DE); Tondorf, Sebastian, 83329 Waging am See (DE); Pechak, Peter, 83371 Stein/Traun (DE); Mauerberger, Herbert, 83278 Traunstein (DE); Obermaier, Franz, 83308 Trostberg (DE); Höhentinger, Josef, 83376 Truchtlaching (DE)

(56) Entgegenhaltungen:
- EP-A- 0 512 864
- EP-A- 1 014 034
- DE-A- 19 854 733

## Beschreibung

Die Erfindung betrifft eine optische Positionsmesseinrichtung mit einem von einer Abtasteinrichtung optisch abtastbaren Maßstab.

Derartige Positionsmesseinrichtungen werden insbesondere bei Bearbeitungsmaschinen zur Messung der Relativbewegung eines Werkzeugs bezüglich eines zu bearbeitenden Werkstücks sowie bei Koordinatenmessmaschinen eingesetzt. Bei diesem Einsatz ist die Positionsmesseinrichtung elektrischen Feldern, insbesondere störenden elektrischen Wechselfeldern ausgesetzt, welche auf die Abtasteinrichtung einwirken und elektrische Störsignale und daraus resultierend eine fehlerhafte Positionserfassung verursachen.

Es sind verschiedene Maßnahmen bekannt geworden, um die besonders störanfälligen Detektorelemente der Abtasteinrichtung gegen elektrische Felder abzuschirmen.

Gemäß der EP 0 328 661 B1 - von der unsere Erfindung ausgeht - befinden sich die Detektorelemente in einem geerdeten Gehäuse. Vor den lichtempfindlichen Flächen der Detektorelemente ist das Gehäuse mit einer transparenten Abtastplatte abgeschlossen. Auf der Abtastplatte ist ein Abtastmuster aus opaken, elektrisch leitendem Material ausgebildet, das ebenfalls geerdet ist. Durch dieses Abtastmuster werden transparente Fenster begrenzt, die in einer bestimmten Phasenlage zueinander zur Erzeugung von gegeneinander phasenverschobenen elektrischen Abtastsignalen angeordnet sind. Diese Maßnahme führt nur zu einer ausreichenden Abschirmung, wenn das Abtastmuster genügend kleine Fenster aufweist.

Um eine vollständige Abschirmung zu erreichen, wurde in der DE 44 02 554 C2 vorgeschlagen, den lichtempfindlichen Bereich der Detektorelemente mit einem transparenten, elektrisch leitenden Abschirmkörper abzuschirmen, der geerdet ist. Als Abschirmkörper wird eine transparente Folie vorgeschlagen, die mit einer transparenten elektrisch leitfähigen Schicht versehen ist. Diese Schicht kann aus dünnen Metallschichten oder leitenden Metalloxidschichten (ITO) bestehen. Es wird auch vorgeschlagen, das Abtastmuster auf einen derartigen Abschirmkörper auszubilden oder die Abtastplatte darauf zu befestigen.

Der Nachteil dieser Maßnahme ist, dass derartige Abschirmkörper nur eine relativ geringe Lichttransmission haben (etwa 85%).

Der Erfindung liegt die Aufgabe zugrunde, eine hohe Störsicherheit der Positionsmesseinrichtung gegen elektrische Felder zu erreichen und durch die Abschirmmaßnahmen den optischen Strahlengang in der Positionsmesseinrichtung möglichst wenig zu stören.

Diese Aufgabe wird durch die Merkmale des Anspruchs 1 gelöst.

In den abhängigen Ansprüchen sind vorteilhafte Ausgestaltungen der Erfindung angegeben.

Die Vorteile der Erfindung liegen darin, dass mit einfachen Mitteln eine gute Abschirmung der Detektorelemente erreicht wird und der optische Strahlengang unbedeutend beeinflusst wird.

Anhand von Ausführungsbeispielen wird die Erfindung näher erläutert:

Es zeigt:
- Figur 1: eine Schnittansicht einer Längenmesseinrich- tung,
- Figur 2: eine Draufsicht II auf die Abtastplatte der Län- genmesseinrichtung gemäß Figur 1,
- Figur 3: eine Unteransicht III der Abtastplatte der Län- genmesseinrichtung gemäß Figur 1,
- Figur 4: einen Ausschnitt einer Kontaktierungsstelle ei- ner Abtastplatte,
- Figur 5: eine Schnittansicht V (Figur 6) einer Abtastein- richtung und
- Figur 6: die Ansicht VI der Abtastplatte gemäß Figur 5.

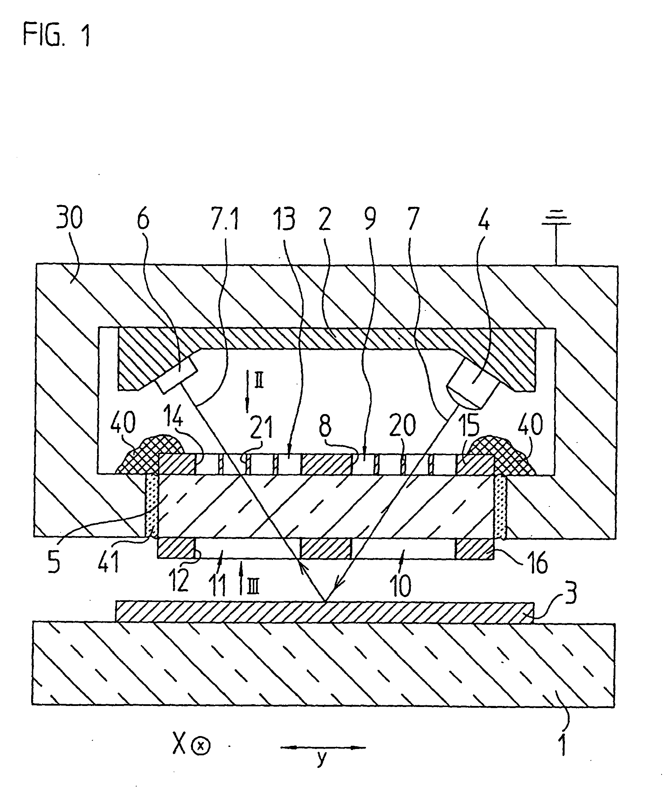

Figur 1 zeigt eine optische inkrementale Längenmesseinrichtung im Schnitt quer zur Messrichtung X. Die Längenmesseinrichtung besteht in bekannter Weise aus einem Maßstab 1, der relativ zu einer Abtasteinrichtung 2 in Messrichtung X verschiebbar ist. Der Maßstab 1 weist eine reflektierende Teilung 3 auf, die von der Abtasteinrichtung 2 abgetastet wird. Die Abtasteinrichtung 2 umfasst eine Lichtquelle 4, deren Licht kollimiert durch eine transparente Abtastplatte 5 auf den Maßstab 1 trifft, dort von der Teilung 3 reflektiert wird und durch die Abtastplatte 5 auf Detektorelemente 6 der Abtasteinrichtung 2 trifft.

Das von der Lichtquelle 4 ausgehende Lichtbündel 7 wird beim Auftreffen auf die Abtastplatte 5 von einer Blende 8 begrenzt. Das Lichtbündel 7 tritt durch das von der Blende 8 begrenzte erste Fenster 9 und trifft auf ein Abtastgitter 10, das aus abwechselnd nebeneinander angeordneten opaken Bereichen 10.1 und transparenten Bereichen 10.2 besteht. Das Abtastgitter 10 dient zur Bildung mehrerer Teilstrahlenbündel 7.1, die mit der Teilung 3 des Maßstabs 1 wechselwirken und auf den Detektor 6 zur Erzeugung von positionsabhängigen, gegeneinander phasenverschobenen Abtastsignalen treffen. Die transparenten Bereiche 10.2 des Abtastgitters 10 sind balkenförmige Fenster mit einer Breite in X-Richtung von einigen µm (1 µm bis 20 µm) und einer Länge in Y-Richtung von einigen mm. Die an der Teilung 3 reflektierten Teilstrahlenbündel 7.1 durchlaufen ein zweites Fenster 11 der Abtastplatte 5, das durch eine opake Blende 12 begrenzt ist und durch ein drittes Fenster 13 der Abtastplatte 5, das ebenfalls durch eine opake Blende 14 begrenzt ist.

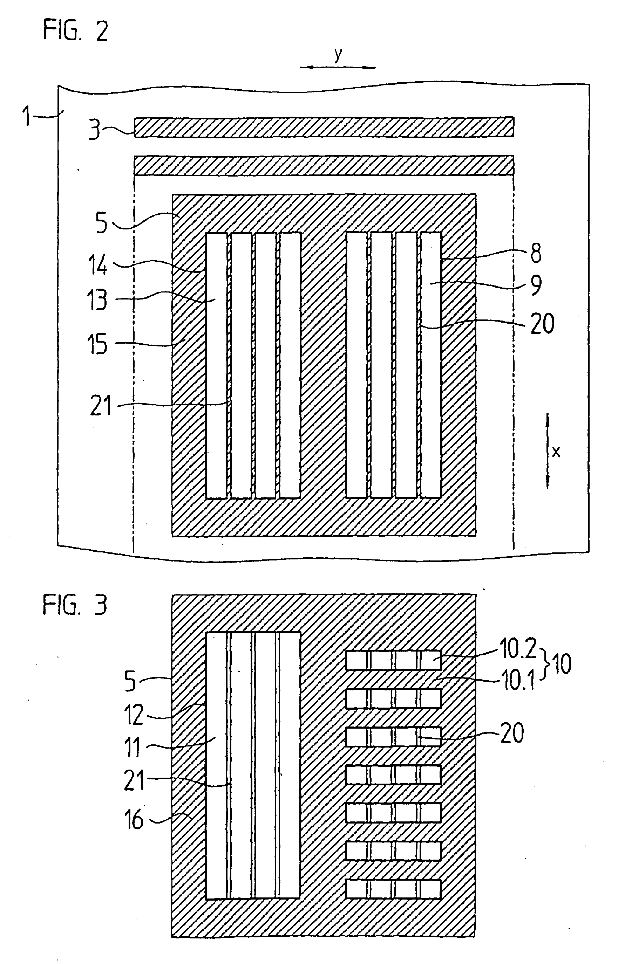

Die opake Blende 8 des ersten Fensters 9 und die opake Blende 14 des dritten Fensters 14 wird von einer opaken Schicht 15 aus elektrisch leitendem Material auf einer Oberfläche der Abtastplatte 5 gebildet. Die Draufsicht II dieser Schicht 15 mit den Fenstern 9 und 13 ist in Figur 2 dargestellt.

Die opaken Bereiche 10.1 des Abtastgitters 10 und die opake Blende 12 des zweiten Fensters 11 sind auf der Oberfläche der Abtastplatte 5 angeordnet, die der Teilung 3 direkt gegenüberliegt und sind als eine Schicht 16 aus einem elektrisch leitenden Material ausgebildet. Die Draufsicht III dieser Schicht 16 ist in Figur 3 dargestellt.

Die transparente Abtastplatte 5 besteht aus elektrisch nichtleitendem Material, in der Regel aus Glas, so dass elektrische Wechselfelder als elektrische Störstrahlung durch die Fenster 9, 11, 13 und 10.2 auf den Detektor 6 gelangen können.

Zur Abschirmung gegen elektrische Felder ist im Fenster 9 partiell eine Struktur 20 aus elektrisch leitendem Material ausgebildet. Diese partielle Struktur 20 ist in Form von dünnen Linien bzw. Stegen ausgebildet, welche die transparenten Bereiche 10.2 des Abtastgitters 10 kreuzen. Die partielle Struktur 20 ist in Figur 2 nur schematisch dargestellt. Zur Unterscheidung von den Strahlengang 7 begrenzender Blende 8 und Struktur 20 ist die Blende 8 in dickeren Linien dargestellt als die Struktur 20. In der Praxis ist es vorteilhaft, wenn die Struktur 20 aus dem gleichen Material besteht wie die Schicht 15, so dass sie in einem gemeinsamen Beschichtungsverfahren aufgebracht werden kann.

In der Öffnung, welche durch die Fenster 11 und 13 gebildet ist, ist ebenfalls partiell eine Struktur 21 aus elektrisch leitendem Material ausgebildet. Auch diese Struktur 21 ist Bestandteil der Schicht 15 und in Form von Stegen ausgebildet, welche quer zu den reflektierenden Strichen 3 und den opaken Bereichen 10.2 des Abtastgitters 10 verlaufen.

Die partielle Strukturen 20 und 21 sind vorteilhafterweise Stegen mit einer Breite von einigen µm, insbesondere kleiner 10 µm und einem gegenseitigen Abstand, der ein Vielfaches der Breite ist, insbesondere im Bereich 100 µm bis 500 µm. Ist die Breite beispielsweise 5 µm und der gegenseitige Abstand 160 µm, liegt der Transmissionsverlust des einmal durchtretenden Lichtbündels 7 bei etwa 3 %. Durch die erfindungsgemäße Maßnahme ist somit eine gute Abschirmung erreichbar und die Transmissionsverluste sind minimal.

Die partiellen Strukturen 20, 21 im Lichtstrahlengang 7 und 7.1 sind derart ausgebildet, dass sie keine merkliche positionsabhängige Modulation des Lichtstrahlenbündels bewirken. Besonders vorteilhaft ist es daher, wenn die linienförmigen Strukturen 20, 21 in Messrichtung X verlaufen, also senkrecht zu der Wirkung des Abtastgitters 10 zur Erzeugung der Teilstrahlenbündel 7.1.

Anstelle der geradlinigen Strukturen 20, 21 können aber auch anders geformte partielle Strukturen aus einem elektrisch leitenden Material in Form von Wellenlinien, in Form eines Netzes mit sich kreuzenden Linien oder in Form einer ein transparentes Punktmuster bildende Struktur vorgesehen sein. Sind diese Strukturen besonders klein bzw. schmal, stören Sie den Strahlengang nur unerheblich. Eine besonders gute Abschirmung erreicht man, wenn die einzelnen Stege, Linien bzw. Musterelemente der partiellen Struktur elektrisch leitend miteinander verbunden sind.

Die Abtastplatte 5 ist im Gehäuse 30 beispielsweise mit einem Klebstoff 41 befestigt. Die Schicht 15, welche die partiellen Strukturen 20, 21 und die Blenden 8 und 14 bilden stellen mit dem Gehäuse 30 aus elektrisch leitendem Material einen Faraday-Käfig dar, in dem zumindest der Detektor 6 der elektrischen Komponenten der Abtasteinrichtung 2 untergebracht ist. Hierzu sind die partiellen Strukturen 20, 21 sowie die Blenden 8, 14 - also die Schicht 15 - mit dem Gehäuse 30 elektrisch leitend verbunden. Diese Verbindung kann mittels eines elektrisch leitenden Klebstoffs 40 oder durch Lötung erfolgen. Die Abschirmung kann weiter erhöht werden, wenn das Gehäuse 30 geerdet ist.

Bei optischen Positionsmesseinrichtungen ist der Abtastabstand, d. h. der Abstand zwischen dem Abtastgitter 10 und der Teilung 3 äußerst gering. In diesem Raum ist es schwierig die Schicht 16 mit dem Gehäuse 30 zu kontaktieren. Aus diesem Grund ist es daher vorteilhaft, wenn zur Abschirmung nicht die dem Maßstab 1 direkt gegenüberliegende Oberfläche der Abtastplatte 5, sondern die dem Detektor 6 direkt gegenüberliegende Oberfläche mit der Schicht 15 verwendet wird. An dieser Stelle ist in der Regel ausreichend Platz zur Herstellung der elektrisch leitenden Verbindung zwischen dem Gehäuse 30 und der Schicht 15.

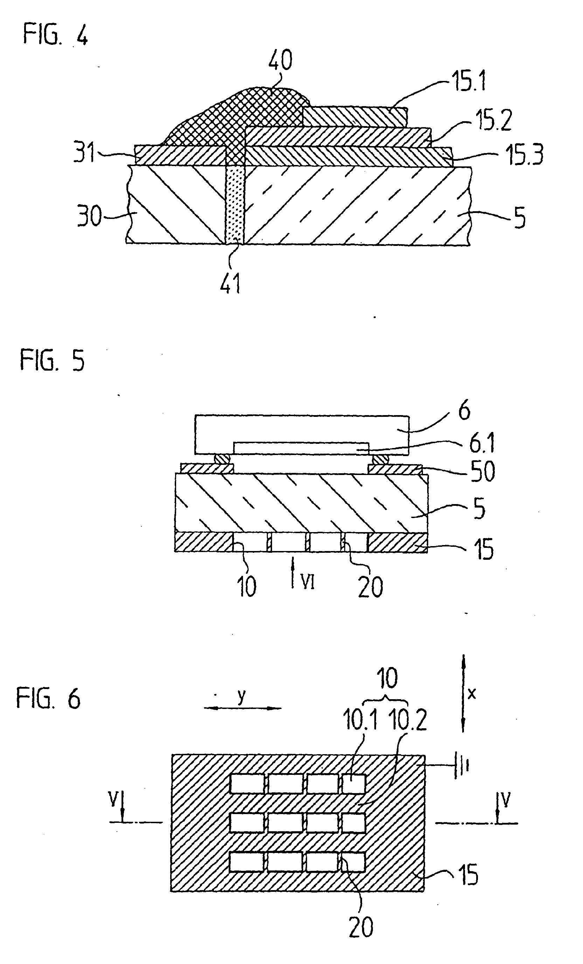

Die elektrisch leitende Schicht 15 ist beispielsweise Chrom. Zur Verminderung der Reflexion besteht die Schicht 15 oft aus einem Schichtenpaket, bei dem die oberste Schicht eine reflexmindernde und elektrisch nichtleitende Schicht, z.B. aus Chromdioxid ist. Ein Beispiel hierzu ist in Figur 4 dargestellt. Die in Figur 1 mit dem Bezugszeichen 15 versehene Schicht ist ein Schichtenpaket aus drei Schichten 15.1, 15. 2 und 15.3. Von diesen Schichten ist nur die mittlere aus elektrisch leitendem Material. Zur elektrischen Kontaktierung der Schicht 15.2 mit dem Gehäuse 30 ist diese Schicht 15.2 freigelegt, indem die oberste Schicht 15.1 partiell entfernt ist, insbesondere durch Ätzen oder Laserabtrag.

Wenn das Gehäuse 30 aus elektrisch nichtleitendem Material besteht ist es vorteilhaft, den Faraday-Käfig durch Beschichtung des Gehäuses 30 mit einem elektrisch leitenden Material zu schaffen. Die elektrisch leitende Schicht 15 bzw. 15.2 ist dann mit der elektronisch leitenden Beschichtung 31 des Gehäuses 30 durch den Klebstoff 40 kontaktiert, wie in Figur 4 schematisch dargestellt.

In den Figuren 5 und 6 ist schematisch ein weiteres Beispiel dargestellt. Die transparente Abtastplatte 5 trägt wie bei dem Beispiel gemäß der Figuren 1 bis 3 auf einer der Oberflächen das Abtastgitter 10 mit den opaken Bereichen 10.1 und den transparenten Fenstern 10.2. Die transparenten Bereiche 10.2 des Abtastgitters 10 sind balkenförmige Fenster mit einer Breite in X-Richtung von einigen µm (1 µm bis 20 µm) und einer Länge in Y-Richtung von einigen mm. Bestehen die opaken Bereiche 10.1 des Abtastgitters 10 aus elektrisch leitenden Material, werden damit elektrische Felder mit einer Richtung parallel zur Längenausdehnung (im Beispiel Y-Richtung) relativ gut abgeschirmt. Elektrische Störstrahlungen in anderen Richtungen, insbesondere parallel zur Breitenausdehnung (im Beispiel X-Richtung) können aber durch die transparenten Bereiche 10.2 zum Detektor 6 gelangen .

In den Fenstern 10.2 ist deshalb partiell die Struktur 20 in Form von senkrecht zum Verlauf der balkenförmigen Öffnungen 10.2 ausgerichteten Stegen eingebracht, die mit den opaken Bereichen 10.1 eine elektrisch leitende und geerdete Schicht 15 zur Abschirmung bildet. Bei diesem Beispiel ist die Abtastplatte 5 gleichzeitig Träger des Detektors 6, dessen lichtempfindlicher Flächenbereich 6.1 dem Abtastgitter 10 zugewandt ist. Auf einer Oberfläche der Abtastplatte 5 sind Leiterbahnen in Form einer elektrisch leitenden Schicht 50 aufgebracht, mit der der Detektor 6 über Bumps kontaktiert ist. Diese Kontaktierung auf einer Abtastplatte 5 ist beispielsweise in der US 5,670,781 beschrieben. Herstellungstechnisch besonders vorteilhaft ist es, wenn in nicht gezeigter Weise die Leiterbahnen 50, die opaken Bereich 10.1 des Abtastgitters 10 und die in den transparenten Fenstern 10.2 des Abtastgitters 10 eingebrachten partiellen Strukturen 20 gemeinsam auf einer Oberfläche der Abtastplatte 5 in Form einer gemeinsamen Beschichtung ausgebildet sind.

Sollte bei den gezeigten Ausführungsbeispielen die opake Schicht 15 zur Begrenzung der Fenster 9, 13 bzw. 10.2 aus einem elektrisch nichtleitenden Material bestehen, kann die elektrisch leitende partielle Struktur 20, 21 alternativ auch in den opaken Bereichen einer Oberfläche der Abtastplatte 5 ausgebildet sein.

Das Abtastgitter kann auch ein transparentes Phasengitter sein, wobei die partielle Struktur 20, 21 direkt auf oder unter dieses Phasengitter aufgebracht ist.

In den Figuren ist der Detektor 6 nur schematisch dargestellt. Der Detektor 6 weist in der Regel mehrere lichtempfindliche Bereiche auf. Der Detektor 6 kann aber auch aus mehreren diskreten Detektorelementen bestehen.

Die erfindungsgemäßen Maßnahmen können bei Winkel-und Längenmesseinrichtungen Anwendung finden.

## Patentansprüche

1. Optische Positionsmesseinrichtung mit
- einem Maßstab (1);
- einer relativ zum Maßstab (1) in eine Messrichtung X bewegbaren Abtasteinrichtung (2), welche eine Abtastplatte (5) mit zumindest einem transparenten Fenster (9, 11, 13, 10.2) aufweist, wobei das transparente Fenster (9, 11, 13, 10.2) von einer opaken Blende (8, 12, 14, 10.1) begrenzt ist, **gekennzeichnet durch**
- eine zumindest im Bereich des Fensters (9, 11, 13, 10.2) partiell ausgebildeten Struktur (20, 21) aus einem elektrisch leitenden Material, die derart ausgebildet ist, dass sie keine merkliche positionsabhängige Modulation eines Lichtstrahlenbündels (7) bewirkt.

2. Optische Positionsmesseinrichtung nach Anspruch 1, **dadurch gekennzeichnet, dass** die opake Blende (8, 14) mit der partiellen Struktur (20, 21) auf einer Oberfläche der Abtastplatte (5) in Form einer gemeinsamen zusammenhängenden Schicht (15) aus einem elektrisch leitenden Material ausgebildet ist.

3. Optische Positionsmesseinrichtung nach Anspruch 1 oder 2, **dadurch gekennzeichnet, dass** die partielle Struktur (20, 21) aus zueinander parallelen Stegen gebildet ist, die in Messrichtung X verlaufen.

4. Optische Positionsmesseinrichtung nach Anspruch 3, **dadurch gekennzeichnet, dass** der gegenseitige Abstand der Stege zumindest das Zehnfache der Breite der Stege ist.

5. Optische Positionsmesseinrichtung nach einem der vorhergehenden Ansprüche, **dadurch gekennzeichnet, dass** der Detektor (6) von einem elektrisch leitenden Gehäuse (30) umgeben ist, dessen Öffnung von der Abtastplatte (5) abgedeckt ist, und dass die partielle Struktur (20, 21) mit dem Gehäuse (30) elektrisch leitend verbunden ist.

6. Optische Positionsmesseinrichtung nach einem der vorhergehenden Ansprüche, **dadurch gekennzeichnet, dass** die partielle Struktur (20, 21) geerdet ist.

7. Optische Positionsmesseinrichtung nach einem der vorhergehenden Ansprüche, **dadurch gekennzeichnet, dass** die Abtastplatte (5) eine erste Oberfläche aufweist, welche dem Maßstab (1) direkt gegenüberliegt und eine zweite Oberfläche aufweist, welche dem Detektor (6) zugewandt ist, wobei die partielle Struktur (20, 21) auf der zweiten Oberfläche ausgebildet ist.

8. Optische Positionsmesseinrichtung nach Anspruch 7, **dadurch gekennzeichnet, dass** auf der ersten Oberfläche Fensterbereiche (10.2) in Form eines Abtastgitters (10) mit in Messrichtung X nebeneinander abwechselnd angeordneten opaken Bereichen (10.1) und transparenten Bereichen (10.2) ausgebildet sind.

## Claims

1. An optical position measuring device comprising
- a measuring stick (1);
- a scanning device (2), which can be moved relative to the measuring stick (1) in a measuring direction X and which encompasses a scanning disc (5) comprising at least one transparent window (9, 11, 13, 10.2), wherein the transparent window (9, 11, 13, 10.2) is defined by an opaque screen (8, 12, 14, 10.1), **characterized by**
- a structure (20, 21), which is partially embodied, at least in the area of the window (9, 11, 13, 10.2), of an electrically conducting material and being embodied in such a manner that it does not cause any noticeable position-depending modulation of a light ray bundle (7)

2. The optical position measuring device according to claim 1, **characterized in that** the opaque screen (8, 14) with the partial structure (20, 21) is embodied on a surface of the scanning disc (5) in the form of a common continuous layer (15) made of an electrically conducting material.

3. The optical position measuring device according to claim 1 or 2, **characterized in that** the partial structure (20, 21) is formed from bars, which are parallel to one another and which run in measuring direction X.

4. The optical position measuring device according to claim 3, **characterized in that** the mutual distance of the bars is at least ten times the width of the bars.

5. The optical position measuring device according to one of the preceding claims, **characterized in that** the detector (6) is surrounded by an electrically conducting housing (30), the opening of which is covered by the scanning disc (5) and that the partial structure (20, 21) is connected to the housing (30) in an electrically conducting manner.

6. The optical position measuring device according to one of the preceding claims, **characterized in that** the partial structure (20, 21) is grounded.

7. The optical position measuring device according to one of the preceding claims, **characterized in that** the scanning plate (5) encompasses a first surface, which is located directly opposite to the measuring stick (1) and which encompasses a second surface, which faces the detector (6), wherein the partial structure (20, 21) is embodied on the second surface.

8. The optical position measuring device according to claim 7, **characterized in that** window areas (10.2) in the form of a scanning grid (10) comprising opaque areas (10.1), which are arranged alternately next to one another in measuring direction X and with transparent areas (10.2) are embodied on the first surface.

## Revendications

1. Dispositif optique de mesure de position, avec
- une échelle de mesure (1) ;
- un dispositif de mesurage (2) déplaçable dans la direction de mesurage X, comportant une plaque de détection (5) avec au moins une fenêtre transparente (9, 11, 13, 10.2), la fenêtre transparente (9, 11, 13, 10.2) étant délimitée par un cache opaque (8, 12, 14, 10.1), **caractérisé en ce que**
- une structure (20, 21) partiellement formée au moins dans la région de la fenêtre (9, 11, 13, 10.2) et constituée d'un matériau électriquement conducteur est conçue de telle façon qu'elle ne produit pas de modulation notable d'un faisceau lumineux (7) en fonction de la position.

2. Dispositif optique de mesure de position selon là revendication 1, **caractérisé en ce que** le cache opaque (8, 14) est constitué d'un matériau conducteur avec la structure partielle (20, 21) sur une surface de la plaque de détection (5), sous la forme d'une couche commune solidarisée (15).

3. Dispositif optique de mesure de position selon la revendication 1 ou 2, **caractérisé en ce que** la structure partielle (20, 21) est formée par des tiges parallèles entre elles, qui s'étendent dans la direction de mesurage X.

4. Dispositif optique de mesure de position selon la revendication 3, **caractérisé en ce que** l'écart réciproque des tiges équivaut à au moins dix fois la largeur des tiges.

5. Dispositif optique de mesure de position selon l'une quelconque des revendications précédentes, **caractérisé en ce que** le détecteur (6) est entouré par un boîtier électriquement conducteur (30), dont l'ouverture est recouverte par la plaque de détection (5), et **en ce que** la structure partielle (20, 21) est reliée au boîtier (30) par conduction électrique.

6. Dispositif optique de mesure de position selon l'une quelconque des revendications précédentes, **caractérisé en ce que** la structure partielle (20, 21) est mise à la terre.

7. Dispositif optique de mesure de position selon l'une quelconque des revendications précédentes, **caractérisé en ce que** la plaque de détection (5) comporte une première surface située directement en face de l'échelle de mesure (1), ainsi qu'une deuxième surface, tournée vers le détecteur (6), la structure partielle (20, 21) étant formée sur la deuxième surface.

8. Dispositif optique de mesure de position selon la revendication 7, **caractérisé en ce que** des régions de fenêtre (10.2) sont formées sur la première surface, sous la forme d'une grille de détection (10), avec des régions opaques (10.1) et des régions transparentes (10.2) disposées en alternance, côte à côte dans la direction de mesurage X.
